# EUROPEAN PATENT SPECIFICATION

(11) **EP 4 152 708 B1**
(45) Date of publication and mention of the grant of the patent: **15.05.2024**
(21) Application number: 20938033.6
(22) Date of filing: 27.05.2020
(51) Int. Cl.: H04L 27/26, H04W 72/04, H04W 72/12, H04L 5/06, H04L 5/00

(54) **COMMUNICATION METHOD AND COMMUNICATION DEVICE**
KOMMUNIKATIONSVERFAHREN UND KOMMUNIKATIONSVORRICHTUNG
PROCÉDÉ DE COMMUNICATION ET DISPOSITIF DE COMMUNICATION

(43) Date of publication of application: 22.03.2023
(73) Proprietor: Huawei Technologies Co., Ltd., Longgang District, Shenzhen, Guangdong 518129 (CN)
(72) Inventor: GAO, Lei, Shenzhen, Guangdong 518129 (CN); WANG, Jian, Shenzhen, Guangdong 518129 (CN)
(74) Representative: Epping - Hermann - Fischer
(86) International application number: PCT/CN2020/092663
(87) International publication number: WO 2021/237523

(56) References cited:
- WO-A1-2017/177451
- WO-A2-2005/053198
- CN-A- 102 983 954
- CN-A- 103 379 072
- CN-A- 107 733 827
- CN-A- 108 023 715
- CN-A- 108 270 711
- US-A1- 2010 103 897
- US-A1- 2012 093 105

## Description

### TECHNICAL FIELD

This application relates to the field of wireless communications technologies, and in particular, to a communication method and a communications device, and is particularly applicable to short-range wireless communication, for example, cockpit domain communication.

### BACKGROUND

Global communications technologies are evolving rapidly. The development speed and application fields of wireless communications technologies have surpassed those of wired communications technologies, showing a vigorous development trend. For example, development and application of an in-vehicle communications technology attract more and more attention from people. Compared with the existing wired communication, in-vehicle wireless communication can further reduce a quantity, length, and weight of internal wiring harnesses of a vehicle, and corresponding installation, and maintenance costs. Therefore, the in-vehicle communications technology is gradually becoming wireless. Diversification of in-vehicle applications leads to an increasing quantity and types of in-vehicle communications nodes, and imposes a higher requirement on an in-vehicle communication capability.

In many wireless communications scenarios, a plurality of communications nodes communicate with each other by using a communication domain. There may be one or more communication domains in a specific communication area or range. The communication domain is a system including a group of communications nodes that have a communication relationship, and the communication connection relationship (that is, a communication link) between the communications nodes. One communication domain includes one primary communications node (which may be referred to as a primary node for short) and at least one secondary communications node (which may be referred to as a secondary node for short). The primary node manages a time-frequency resource of the communication domain, and has a function of scheduling a resource for the communication link between the primary and secondary nodes.

When time-frequency resources between different communication links or even between different domains overlap, vehicles or a plurality of domains in a vehicle may interfere with each other. Interference to transmission of physical layer control signaling, system information, acknowledgment/negative acknowledgment feedback information, scheduling request information, or access request information greatly affects transmission performance. Therefore, how to perform signal transmission by using frequency domain resources to reduce interference becomes an urgent problem to be resolved.

CN 108 023 715 A relates to the field of wireless communication technologies, and in particular, to a synchronization signal receiving and sending method and a corresponding device. The method comprises the following steps: receiving frequency domain signal format information sent by a base station to serve as a synchronization signal of preset frequency domain signal format information; determining a frequency domain position of the synchronization signal by searching; determining the position information of a subcarrier where a DC carrier is located based on the synchronization signal and related information in a broadcast channel; and based on the frequency domain position information of the synchronization signal and the position information of the subcarrier where the DC carrier is located, determining the frequency domain position of a system bandwidth.

### SUMMARY

The invention is defined by the appended claims. Embodiments of this application provide a communication method and a communications device, to reduce interference by properly using frequency domain resources for signal transmission.

According to a first aspect, a communication method is provided, and is used for signal transmission between a secondary node and a primary node. The method may be performed by the secondary node or the primary node, or the method may be performed by a chip or an integrated circuit configured on the secondary node or the primary node. This is not limited in this application. The primary node manages the secondary node, has a resource allocation function, and is responsible for allocating resources to the secondary node. The secondary node communicates, based on scheduling of the primary node, with the primary node by using the resources allocated by the primary node. The method includes: determining a first signal; and transmitting the first signal in a first sub-band, where the first sub-band is included in a first frequency domain resource, the first frequency domain resource is used to transmit the first signal and first service data, the first frequency domain resource includes M sub-bands, and M is an integer greater than or equal to 1, wherein when M is an odd number, the first sub-band is a middle sub-band of the M sub-bands included in the first frequency domain resource; or when M is an even number, the first sub-band is included in two middle sub-bands of the M sub-bands included in the first frequency domain resource, wherein the two middle sub-bands of the M sub-bands included in the first frequency domain resource are a second sub-band and a third sub-band.

The first frequency domain resource is adjacent to a second frequency domain resource in frequency domain, and the second frequency domain resource is not used to transmit the first signal and the first service data. A spacing length between the second sub-band and the second frequency domain resource is greater than a spacing length between the third sub-band and the second frequency domain resource, and the first sub-band is the second sub-band.

In this embodiment of this application, the first signal is transmitted in the first sub-band, a frequency domain resource used to transmit the first signal is less than or equal to one sub-band, and a transmission resource of the first signal is limited in one sub-band and does not exceed a boundary of the sub-band. This reduces interference to transmission of the first signal. The first sub-band may alternatively be a frequency domain resource of another size, for example, two consecutive or discrete sub-bands, or a specific quantity of consecutive sub-carriers. The first sub-band is not limited herein.

The first sub-band is located in a middle sub-band of the M sub-bands included in the first frequency domain resource. The first frequency domain resource is used to transmit the first signal and the first service data. The first frequency domain resource is a resource used by a same node for transmission, so that the resource used to transmit the first signal can be far away from a sub-band used by another node for transmission. In this way, interference to transmission of the first signal is reduced. When M is an even number, the first sub-band is a sub-band that is in the two middle sub-bands of the M sub-bands included in the first frequency domain resource and that is away from the second frequency domain resource. This can minimize interference to transmission of the first signal.

In a possible implementation, the first signal includes at least one of physical layer control signaling, system information, acknowledgment/negative acknowledgment (Acknowledgement/Negative Acknowledgement, ACK/NACK) feedback information, scheduling request information, or access request information. Transmission performance can be improved by avoiding interference to transmission of the physical layer control signaling, the system information, the acknowledgment/negative acknowledgment feedback information, the scheduling request information, or the access request information.

In a possible implementation, a synchronization signal is transmitted, where the synchronization signal is used to indicate information about the first sub-band.

In a possible implementation, system information is transmitted, where the system information is used to indicate the information about the first sub-band. The system information may separately indicate the first sub-band, or the system information and the synchronization signal jointly indicate the first sub-band.

In a possible implementation, the first frequency domain resource is determined based on the information about the first sub-band and the system information. The first frequency domain resource is determined based on the information about the first sub-band and the system information. This can reduce signaling for determining the first frequency domain resource.

### BRIEF DESCRIPTION OF DRAWINGS

FIG. 1 is a schematic diagram of a scenario architecture of a communication method according to an embodiment of this application;
FIG. 2 is a schematic diagram of a structure of a frequency domain resource unit according to an embodiment of this application;
FIG. 3 is a schematic diagram of a structure of another frequency domain resource unit according to an embodiment of this application;
FIG. 4 is a schematic diagram of a structure of still another frequency domain resource unit according to an embodiment of this application;
FIG. 5 is a schematic diagram of a structure of a communications device according to an embodiment of this application;
FIG. 6 is a schematic diagram of a structure of another communications device according to an embodiment of this application; and
FIG. 7 is a schematic diagram of a structure of a chip according to an embodiment of this application.

### DESCRIPTION OF EMBODIMENTS

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of this application described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

A communications device in embodiments of this application may be a vehicle-mounted device such as a head unit, a vehicle-mounted speaker, or a vehicle-mounted microphone, or may be an electronic device such as a mobile phone, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), a wearable electronic device, or a virtual reality device.

The following first explains some terms in this application, to facilitate understanding by a person skilled in the art.
(1) CDC: cockpit domain controller or control domain cockpit. The cockpit domain controller is referred to as head unit for short. In addition to conventional radio, music and video playing, and navigation functions, the current head unit provides cellular communication functions (3G and 4G), and can implement information communication between people and a vehicle and between the vehicle and the outside world by using a CAN-BUS technology of the vehicle. This improves user experience and enhances service and security related functions.
(2) Primary node and secondary node: Two types of nodes that are distinguished in terms of logical function are respectively the primary node and secondary node. The primary node manages the secondary node, has a resource allocation function, and is responsible for allocating resources to the secondary node. The secondary node communicates, based on scheduling of the primary node, with the primary node by using the resources allocated by the primary node. The nodes may be various apparatuses. For example, the primary node is a mobile phone, the secondary node is a headset. The mobile phone establishes a communication connection to the headset to implement data exchange. The mobile phone manages the headset. The mobile phone has a resource allocation function, and may allocate resources to the headset.
(3) Communications domain: The communication domain is a system including a group of communication nodes that have a communication relationship, and a communication connection relationship between the communication nodes. One apparatus or device may be in a plurality of communication domains. For example, when a mobile phone performs wireless communication with a headset, the mobile phone is in a communication domain a including the mobile phone and the headset. In the communication domain a, the mobile phone is a primary node, and the headset is a secondary node. Then, after the mobile phone detects a CDC and establishes a wireless connection to the CDC, the mobile phone is also in a communication domain b including the mobile phone and the CDC. In the communication domain b, the CDC is a primary node, the mobile phone is a secondary node, and the mobile phone follows scheduling of the CDC. The communication domain b may further include other secondary nodes such as a vehicle-mounted sound box and a microphone.

A wireless communication scenario to which the communication method provided in embodiments of this application is applied may include wide area wireless communication, for example, communication between a plurality of base stations and a plurality of user equipments (User Equipment, UE). The base station serves as a primary node, the UE serves as a secondary node, the base station allocates a resource to the UE, and the UE is scheduled by the base station. Alternatively, the wireless communication scenario may include an in-vehicle wireless communication scenario, for example, communication between a CDC and each of a vehicle-mounted sound box, a vehicle-mounted microphone, and a mobile phone, and communication between the mobile phone and a wearable device such as a headset. The wireless communication scenario may also include local wireless communication, for example, communication between a plurality of access points (Access Point, AP) and a plurality of stations (Station).

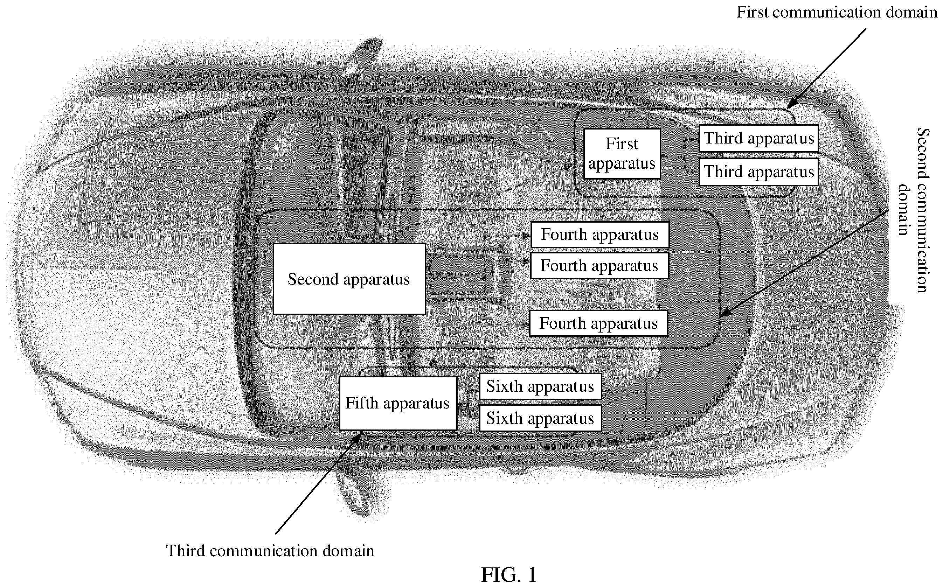

To facilitate understanding of the communication method in embodiments of this application, the following specifically uses an in-vehicle wireless communication scenario as an example for description. However, the communication method in embodiments of this application is not limited to an in-vehicle communication scenario. FIG. 1 is a schematic diagram of a scenario architecture of a communication method according to an embodiment of this application. The scenario architecture may include but is not limited to a first apparatus, a second apparatus, a third apparatus, and a fourth apparatus. The first apparatus may be a mobile phone. The second apparatus may be a CDC. There may be a plurality of third apparatuses, for example, wearable devices such as a headset and a band. There may also be a plurality of fourth apparatuses, for example, devices such as a vehicle-mounted sound box and a vehicle-mounted microphone. It can be learned from the foregoing that the first apparatus is different from the second apparatus. In some possible scenarios, types of the first apparatus and the second apparatus may be the same. For example, both the first apparatus and the second apparatus are CDCs, but the first apparatus and the second apparatus represent different CDCs.

The second apparatus may be a device that performs control and management such as allocation and coordination on communication resources in the in-vehicle wireless communication scenario. The second apparatus establishes a communication connection to at least one fourth apparatus to form a second communication domain. The first apparatus establishes a communication connection to at least one third apparatus to form a first communication domain. In a possible implementation, the scenario architecture in this embodiment of this application may further include a communication domain formed by more apparatuses, for example, a fifth apparatus and a sixth apparatus. This is not limited in this application.

In an actual application, in-vehicle applications are diversified, and there are a large quantity and types of in-vehicle communication nodes. When time-frequency resources between different communication links or even between different domains overlap, vehicles or a plurality of domains in a vehicle may interfere with each other. Interference to transmission of physical layer control signaling, system information, acknowledgment/negative acknowledgment (Acknowledgement/Negative Acknowledgement, ACK/NACK) feedback information, scheduling request information, or access request information greatly affects transmission performance. Therefore, how to perform signal transmission by using frequency domain resources to avoid interference becomes an urgent problem to be resolved. Based on this, this application provides a communication method. A frequency domain resource used to transmit a first signal is less than or equal to one sub-band, and is included in a first sub-band. The first sub-band is located in a middle sub-band of M sub-bands included in a first frequency domain resource. The first frequency domain resource is used to transmit the first signal and first service data. The first frequency domain resource is a resource used by a same node for transmission, so that the resource used to transmit the first signal can be far away from a sub-band used by another node for transmission. In this way, interference to transmission of the first signal is avoided.

The following describes in detail embodiments provided in this application with reference to the accompanying drawings.

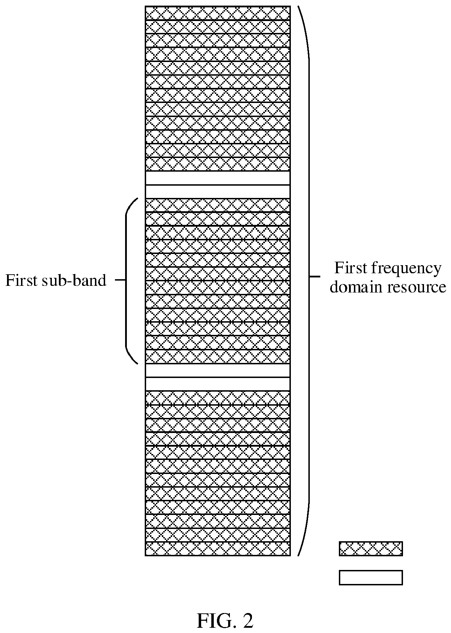

FIG. 2 is a schematic diagram of a structure of a frequency domain resource according to an embodiment of this application. As shown in FIG. 2, the first frequency domain resource may be one carrier, including 40 sub-carriers. Herein, a quantity of sub-carriers included in the first frequency domain resource is merely an example. The quantity of sub-carriers included in the first frequency domain resource is not limited in this application. The first frequency domain resource may be a frequency domain resource corresponding to a time-frequency resource used for actual communication. The first frequency domain resource may be a plurality of consecutive carriers, a plurality of consecutive sub-bands, a plurality of consecutive sub-carriers in one carrier, or some frequency domain resources in one or more carriers. Time domain resources corresponding to the time-frequency resources may be consecutive or inconsecutive. A size of the time domain resources and a type of the time domain resources are not limited in this application.

The following uses communication between the primary node and the secondary node as an example.

When the primary node sends a first signal to the secondary node, the primary node determines the first signal, and sends the first signal in a first sub-band. The secondary node receives the first signal in the first sub-band.

When the secondary node sends the first signal to the primary node, the secondary node determines the first signal, and sends the first signal in the first sub-band. The primary node receives the first signal in the first sub-band. Sending the first signal in the first sub-band means transmitting the first signal in all or a part of the first sub-band. Transmission of the first signal does not exceed one sub-band.

The first frequency domain resource is used to transmit the first signal and first service data, the first frequency domain resource includes M sub-bands, and M is an integer greater than or equal to 1.

The first sub-band may alternatively be a frequency domain resource unit, for example, a carrier, a group of consecutive sub-carriers, or a frequency domain resource of another size. Herein, only the first sub-band is used as an example for description.

Optionally, when M is an odd number, the first sub-band is a middle sub-band of the M sub-bands included in the first frequency domain resource; or when M is an even number, the first sub-band is included in two middle sub-bands of the M sub-bands included in the first frequency domain resource.

A plurality of consecutive sub-carriers form one sub-carrier group, and one sub-carrier group is one sub-band. The first frequency domain resource may be a frequency domain resource including a plurality of sub-bands. A frequency domain spacing between any two sub-bands that are adjacent in frequency domain in the plurality of sub-bands may be 0, an integer quantity of sub-carrier spacings, or another frequency domain spacing. When one sub-band is one carrier, the first frequency domain resource may be a group of carriers, and a spacing between carriers that are adjacent in frequency domain in the first frequency domain resource may be an integer quantity of sub-carrier spacings or another frequency domain spacing. For another example, one sub-band may also be a group of consecutive sub-carriers. For example, the sub-band may be a partial bandwidth (bandwidth, BWP), one carrier includes a plurality of sub-bands, and a frequency domain spacing between sub-bands that are adjacent in frequency domain is 0 or an integer quantity of sub-carriers. The first frequency domain resource is a carrier, or the first frequency domain resource includes some sub-bands in the carrier. A frequency domain spacing between sub-bands that are adjacent in frequency domain and that are in the sub-bands in the first frequency domain resource is 0 or an integer quantity of sub-carriers. The first frequency domain resource includes at least one sub-band, and the M sub-bands included in the first frequency domain resource may be consecutive or inconsecutive. When the first frequency domain resource is inconsecutive, there is no other sub-band between every two adjacent sub-bands. As shown in FIG. 2, an example in which 12 sub-carriers are one sub-band is used. The first frequency domain resource includes three sub-bands, the three sub-bands are inconsecutive, and there are two sub-carriers between every two sub-bands. A sub-carrier between every two sub-bands is a sub-carrier spacing, and the sub-carrier spacing is used by the primary node and the secondary node for transmit/receive conversion or transmit/receive conversion. When consecutive sub-bands are used to transmit service data of a same target node, a sub-carrier spacing may be used to transmit the service data.

The first frequency domain resource is used to transmit the first signal and the first service data. Herein, the first signal and the first service data are a signal and data transmitted by a same target node, for example, are transmitted from a same secondary node to a same primary node, or are transmitted from a same primary node to a same secondary node. The first frequency domain resource is a resource used by a same target node for transmission. The first sub-band used to transmit the first signal is a middle sub-band of the M sub-bands included in the first frequency domain resource. In FIG. 2, M = 3, and M is an odd number. Therefore, the first sub-band is a middle sub-band of the three sub-bands. When M is an even number, the first sub-band is included in two middle sub-bands of the M sub-bands included in the first frequency domain resource. A frequency domain resource other than the first sub-band in the first frequency domain resource may be used to transmit the first service data.

The first sub-band is a middle sub-band of the M sub-bands included in the first frequency domain resource, so that a resource for transmitting the first signal can be far away from a sub-band used for transmission by another node. In this way, interference to transmission of the first signal is avoided.

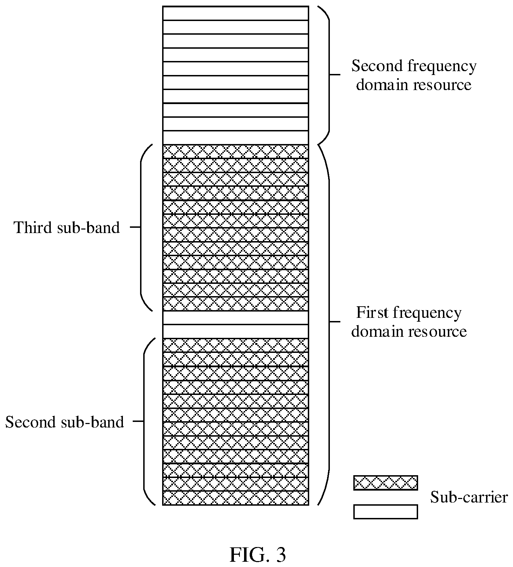

Optionally, when M is an even number, two middle sub-bands of the M sub-bands included in the first frequency domain resource are a second sub-band and a third sub-band. The first frequency domain resource is adjacent to a second frequency domain resource in frequency domain, and the second frequency domain resource is not used to transmit the first signal and the first service data. A spacing length between the second sub-band and the second frequency domain resource is greater than a spacing length between the third sub-band and the second frequency domain resource, and the first sub-band is the second sub-band. As shown in FIG. 3, the first frequency domain resource includes two sub-bands, the first frequency domain resource is adjacent to the second frequency domain resource, and the first frequency domain resource and the second frequency domain resource are resources used by different target nodes for transmission. That the second frequency domain resource is not used to transmit the first signal and the first service data may be that the second frequency domain resource is a resource used by another node for transmission. Two middle sub-bands of two sub-bands included in the first frequency domain are respectively a second sub-band and a third sub-band, and a spacing length between the second sub-band and the second frequency domain resource is greater than a spacing length between the third sub-band and the second frequency domain resource. The spacing length herein may be a quantity of spacing sub-carriers between a center sub-carrier of the second sub-band and a center sub-carrier of the second frequency domain resource and a quantity of spacing sub-carriers between and a center sub-carrier of the third sub-band and the center sub-carrier of the second frequency domain resource, or may be another spacing length obtained in a same manner of comparison. The first sub-band is the second sub-band that is farther away from the second frequency domain resource, so that interference to transmission of the first signal can be minimized.

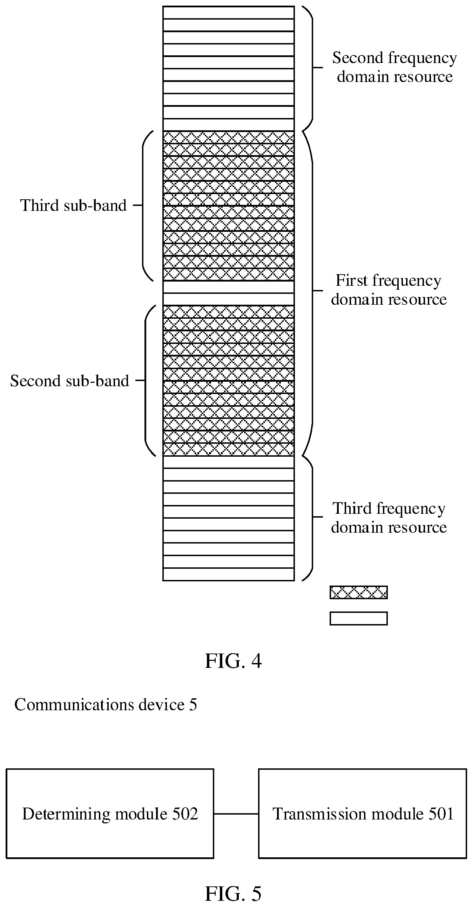

Optionally, when M is an even number, two middle sub-bands of the M sub-bands included in the first frequency domain resource are a second sub-band and a third sub-band. The first frequency domain resource is adjacent to a second frequency domain resource and a third frequency domain resource in frequency domain, the first frequency domain resource is located between the second frequency domain resource and the third frequency domain resource, and the second frequency domain resource and the third frequency domain resource are not used to transmit the first signal and the first service data. The first sub-band is the second sub-band or the third sub-band. As shown in FIG. 4, the first frequency domain resource includes two sub-bands, two middle sub-bands of the two sub-bands included in the first frequency domain are respectively the second sub-band and the third sub-band, and a spacing length between the second sub-band and the third frequency domain resource is the same as a spacing length between the third sub-band and the second frequency domain resource. The first sub-band is the second sub-band or the third sub-band. Optionally, the first signal includes at least one of physical layer control signaling, system information, acknowledgment/negative acknowledgment feedback information, scheduling request information, or access request information. Interference to transmission of the physical layer control signaling, the system information, the acknowledgment/negative acknowledgment feedback information, the scheduling request information, or the access request information greatly affects transmission performance. Therefore, ensuring transmission stability of the physical layer control signaling, the system information, the acknowledgment/negative acknowledgment feedback information, the scheduling request information, or the access request information can improve transmission performance. The system information may be information carried by using a physical broadcast channel.

Alternatively, the first signal may be another type of signal or service data. This is not limited herein.

Optionally, the primary node sends a synchronization signal, and the secondary node receives the synchronization signal. The synchronization signal is used to indicate information about the first sub-band. The synchronization signal herein may alternatively be another signal that has a synchronization function, and a name of the synchronization signal is not limited herein. The system information is used as an example. Before joining the communication domain in which the primary node is located, the secondary node determines existence, a type, and the like of the communication domain by detecting a synchronization signal of the communication domain. The primary node indicates the information about the first sub-band by sending the synchronization signal, and the secondary node determines the first sub-band by receiving the synchronization signal. For example, the synchronization signal is used to indicate a location and a bandwidth of the first sub-band. Herein, the location of the first sub-band may be a frequency domain location corresponding to a start location, a middle location, or an end location of the first sub-band. The synchronization signal may indicate the information about the first sub-band by using at least one of a cyclic shift, time domain information, frequency domain information, and code domain information of the secondary synchronization signal.

Optionally, the primary node sends system information, and the secondary node receives the system information. The system information is used to indicate the information about the first sub-band. For example, the system information is used to indicate the location and the bandwidth of the first sub-band. Herein, the location of the first sub-band may be a frequency domain location corresponding to the start location, the middle location, or the end location of the first sub-band.

Optionally, the system information and the synchronization signal may jointly indicate the information about the first sub-band. For example, the synchronization signal indicates the location of the first sub-band, and the system information indicates the bandwidth of the first sub-band. Optionally, the first frequency domain resource is determined based on the information about the first sub-band and the system information. The secondary node receives the synchronization signal and determines the location of the first sub-band used by the system information. After the secondary node receives the system information by using the first sub-band, the system information is used to indicate a bandwidth of the first frequency domain resource, and the first frequency domain resource can be determined based on the bandwidth of the first frequency domain resource and the location of the first sub-band. For example, after the synchronization signal is used to indicate that a sub-band 1 is the first sub-band, and the system information indicates that the bandwidth of the first frequency domain resource is a size of two sub-bands, it may be determined that the first frequency domain resource includes the sub-band 1 and a sub-band 2.

The information about the first sub-band is indicated by using the synchronization signal/system information, so that signaling overheads for indicating the first sub-band can be reduced, and blind detection overheads of the secondary node can be reduced. The first frequency domain resource is determined by using the information about the first sub - band and the system information, so that signaling overheads for indicating the first frequency domain resource and blind detection overheads of the secondary node can be reduced.

The foregoing describes in detail the method provided in embodiments of this application. The following describes in detail a communications device provided in embodiments of this application. It should be understood that descriptions of the embodiments of the communications device correspond to the descriptions of the method embodiments. Therefore, for content that is not described in detail, refer to the foregoing method embodiment. For brevity, details are not described herein again.

In this embodiment of this application, the communications module may be divided into functional modules. For example, each functional module may be obtained through division based on each corresponding function, or two or more functions may be integrated into one functional module. The integrated module may be implemented in a form of hardware, or may be implemented in a form of a software functional module. It should be noted that, in embodiments of this application, division into the modules is an example, and is merely a logical function division. In actual implementation, another division manner may be used.

For example, when the functional modules of the first apparatus are obtained through division in an integrated manner, FIG. 5 is a possible schematic diagram of a structure of a communications device (a secondary node or a primary node) in the foregoing embodiments of this application. The communications device 5 may include a transmission module 501 and a determining module 502. The determining module 502 may be configured to perform all operations performed by the secondary node or the primary node except a sending operation and a receiving operation in the foregoing method embodiment and/or another process used to support the technology described in this specification. The transmission module 501 may be configured to perform all transmission operations performed by the secondary node or the primary node in the foregoing method embodiment, and/or configured to support another process of the technology described in this specification. Alternatively, the transmission module may be replaced with a transceiver module, or a transmit module and a receive module, and may be configured to support another process of the technology described in this specification.

The determining module 502 is configured to determine a first signal.

The transmission module 501 is configured to transmit the first signal in a first sub-band, where the first sub-band is included in a first frequency domain resource.

The first frequency domain resource is used to transmit the first signal and the first service data.

The first frequency domain resource includes M sub-bands, and M is an integer greater than or equal to 1.

In a possible implementation, when M is an odd number, the first sub-band is a middle sub-band of the M sub-bands included in the first frequency domain resource; or
when M is an even number, the first sub-band is included in two middle sub-bands of the M sub-bands included in the first frequency domain resource.

In a possible implementation, the first signal includes at least one of physical layer control signaling, system information, acknowledgment/negative acknowledgment feedback information, scheduling request information, or access request information.

In a possible implementation, when M is an even number, two middle sub-bands of the M sub-bands included in the first frequency domain resource are a second sub-band and a third sub-band;
the first frequency domain resource is adjacent to a second frequency domain resource in frequency domain, and the second frequency domain resource is not used to transmit the first signal and the first service data; and
a spacing length between the second sub-band and the second frequency domain resource is greater than a spacing length between the third sub-band and the second frequency domain resource, and the first sub-band is the second sub-band.

In a possible implementation, when M is an even number, two middle sub-bands of the M sub-bands included in the first frequency domain resource are a second sub-band and a third sub-band;
the first frequency domain resource is adjacent to a second frequency domain resource and a third frequency domain resource in frequency domain, and the first frequency domain resource is located between the second frequency domain resource and the third frequency domain resource;
the second frequency domain resource and the third frequency domain resource are not used to transmit the first signal and the first service data; and
the first sub-band is the second sub-band or the third sub-band.

In a possible implementation, the transmission module is further configured to transmit a synchronization signal, where the synchronization signal is used to indicate information about the first sub-band.

In a possible implementation, the transmission module is further configured to transmit system information, where the system information is used to indicate the information about the first sub-band.

In a possible implementation, the determining module is further configured to determine the first frequency domain resource based on the information about the first sub-band and the system information.

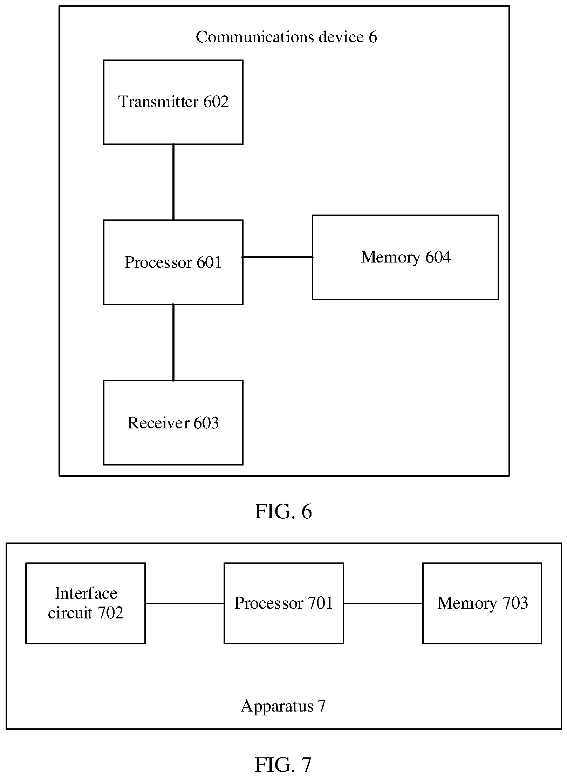

FIG. 6 is another possible schematic diagram of a structure of a primary node or a secondary node according to an embodiment of this application. The communications device 6 may include at least one processor 601 and a transmitter 602. Functions of the processor 601 and the transmitter 602 may be respectively corresponding to specific functions of the determining module 502 and the transmission module 501 shown in FIG. 5, and details are not described herein again. Optionally, the communications device 6 may further include a memory 604, configured to store program instructions and/or data for the processor 601 to read.

FIG. 7 is a schematic diagram of a structure of an apparatus 7 according to an embodiment of this application. The apparatus 7 shown in FIG. 7 may be a primary node or a secondary node itself, or may be a chip or a circuit that can complete a function of the primary node or the secondary node. For example, the chip or the circuit may be disposed in the primary node or the secondary node. The apparatus 7 shown in FIG. 7 may include at least one processor 701 and an interface circuit 702. The processor 701 implements the steps in the method provided in the foregoing embodiments. Optionally, the apparatus 7 may further include a memory 703, and the memory 703 may be configured to store instructions. The processor 701 executes the instructions stored in the memory 703, so that the apparatus 7 implements the steps in the method provided in the foregoing method embodiment.

Further, the processor 701, the interface circuit 702, and the memory 703 may communicate with each other through an internal connection channel, to transfer a control signal and/or a data signal. The memory 703 is configured to store a computer program. The processor 701 may invoke the computer program from the memory 703 and run the computer program, to control the interface circuit 702 to receive a signal or send a signal, or the processor 701 invokes the computer program from the memory 703 by using the interface circuit 702 and runs the computer program, to complete the steps performed by the primary node or the secondary node in the method provided in the foregoing embodiment. The memory 703 may be integrated into the processor 701, or may be disposed separately from the processor 701. Optionally, if the apparatus 7 is a device, the interface circuit 702 may include a receiver and a transmitter. The receiver and the transmitter may be a same component or different components. When the receiver and the transmitter are a same component, the component may be referred to as a transceiver.

Optionally, if the apparatus 7 is a chip or a circuit, the interface circuit 702 may include an input interface and an output interface. The input interface and the output interface may be a same interface, or may be different interfaces. Optionally, if the apparatus 7 is the chip or the circuit, the apparatus 7 may not include the memory 703. The processor 701 may read instructions (a program or code) in a memory outside the chip or the circuit, to implement the steps performed by the first apparatus in the method provided in the foregoing embodiments.

Optionally, if the apparatus 7 is the chip or the circuit, the apparatus 7 may include a resistor, a capacitor, or another corresponding functional unit, and the processor 701 or the interface circuit 702 may be implemented by using the corresponding functional unit.

In an implementation, a function of the interface circuit 702 may be considered to be implemented by using a transceiver circuit or a transceiver-dedicated chip. It may be considered that the processor 701 is implemented by a dedicated processing chip, a processing circuit, a processor, or a general-purpose chip.

In another implementation, it may be considered that the first apparatus provided in this embodiment of this application is implemented by using a general-purpose computer. To be specific, program code for implementing functions of the processor 701 and the interface circuit 702 is stored in the memory 703, and the processor 701 implements the functions of the processor 701 and the interface circuit 702 by executing the program code stored in the memory 703. Functions and actions of the modules or units in the apparatus 7 listed above are merely examples for description. Functional units in the apparatus 7 may be used for actions or processing processes performed by the primary node or the secondary node in the foregoing method embodiment. To avoid repetition, detailed descriptions are omitted herein. An embodiment of this application further provides a system, applied to autonomous driving or intelligent driving. The system includes at least one primary node or secondary node mentioned in the foregoing embodiments of this application. At least one apparatus in the system may be integrated into an entire system or a device, or at least one apparatus in the system may be independently disposed as an element or an apparatus.

In another implementation, when the primary node or the secondary node is implemented by using software, the primary node or the secondary node may be implemented completely or partially in a form of a computer program product. The computer program product includes one or more computer instructions. When the computer program instructions are loaded and executed on a computer, the procedure or functions according to embodiments of this application are all or partially implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

It should be noted that the processor included in the primary node, a secondary node A, or a secondary node B that is configured to perform the communication method provided in embodiments of this application may be one or more processors. The one or more processors may be a central processing unit (central processing unit, CPU), a general purpose processor, a digital signal processor (digital signal processor, DSP), an application-specific integrated circuit (application-specific integrated circuit, ASIC), a field programmable gate array (field programmable gate array, FPGA), another programmable logic device, a transistor logic device, a hardware component, or any combination thereof. The processor may implement or execute various example logical blocks, modules, and circuits described with reference to content disclosed in this application. The processor may be a combination of processors implementing a computing function, for example, a combination of one or more microprocessors, or a combination of the DSP and a microprocessor. Alternatively, if the primary node, the secondary node A, or the secondary node B are processing apparatuses, the processing apparatus may be a CPU, a general purpose processor, a DSP, an ASIC, an FPGA or another programmable logic device, a transistor logic device, a hardware component, or any combination thereof. The processing apparatus may implement or execute various example logical blocks, modules, and circuits described with reference to content disclosed in this application. The processing apparatus may be a combination of processors implementing a computing function, for example, a combination of one or more microprocessors, or a combination of the DSP and a microprocessor.

Method or algorithm steps described with reference to embodiments of this application may be implemented by hardware, or may be implemented by a processor by executing software instructions. The software instruction may include a corresponding software module, and the software module may be stored in a random access memory (random access memory, RAM), a flash memory, a read-only memory (read-only memory, ROM), an erasable programmable read-only memory (erasable programmable read-only memory, EPROM), an electrically erasable programmable read-only memory (electrically erasable programmable read-only memory, EEPROM), a register, a hard disk, a removable hard disk, a compact disc read-only memory (compact disc read-only memory, CD-ROM), or any other form of storage medium well known in the art. For example, a storage medium is coupled to a processor, so that the processor can read information from the storage medium or write information into the storage medium. Certainly, the storage medium may be a component of the processor. The processor and the storage medium may be disposed in an ASIC. In addition, the ASIC may be located in the first apparatus. Certainly, the processor and the storage medium may exist in the primary node, the secondary node A, or the secondary node B as discrete components.

It may be understood that FIG. 5 to FIG. 7 show only a simplified design of the primary node or the secondary node. In actual application, the primary node or the secondary node may include any quantity of transmitters, receivers, processors, controllers, memories, and other possible elements.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc. The protection scope of embodiments of this application shall be subject to the protection scope of the claims.

## Claims

1. A communication method, comprising:
determining a first signal; and
transmitting the first signal in a first sub-band, wherein the first sub-band is comprised in a first frequency domain resource, wherein
the first frequency domain resource is used to transmit the first signal and first service data; and
the first frequency domain resource comprises M sub-bands, and M is an integer greater than or equal to 1;
wherein
when M is an odd number, the first sub-band is a middle sub-band of the M sub-bands comprised in the first frequency domain resource;
when M is an even number, the first sub-band is comprised in two middle sub-bands of the M sub-bands comprised in the first frequency domain resource, wherein the two middle sub-bands comprised in the first frequency domain resource are a second sub-band and a third sub-band;
the first frequency domain resource is adjacent to a second frequency domain resource in frequency domain, and the second frequency domain resource is not used to transmit the first signal and the first service data; and
a spacing length between the second sub-band and the second frequency domain resource is greater than a spacing length between the third sub-band and the second frequency domain resource, and the first sub-band is the second sub-band.

2. The method according to claim 1, wherein
the first signal comprises at least one of physical layer control signaling, system information, acknowledgment/negative acknowledgment feedback information, scheduling request information, or access request information.

3. The method according to any one of claims 1 to 2, comprising:
transmitting a synchronization signal, wherein the synchronization signal is used to indicate information about the first sub-band.

4. The method according to any one of claims 1 to 3, comprising:
transmitting system information, wherein the system information is used to indicate the information about the first sub-band.

5. The method according to claim 3 or 4, comprising:
determining the first frequency domain resource based on the information about the first sub-band and the system information.

6. A communications device (5), comprising:
a determining module (502), configured to determine a first signal; and
a transmission module (501), configured to transmit the first signal in a first sub-band, wherein the first sub-band is comprised in a first frequency domain resource, wherein
the first frequency domain resource is used to transmit the first signal and first service data; and
the first frequency domain resource comprises M sub-bands, and M is an integer greater than or equal to 1;
wherein
when M is an odd number, the first sub-band is a middle sub-band of the M sub-bands comprised in the first frequency domain resource;
when M is an even number, the first sub-band is comprised in two middle sub-bands of the M sub-bands comprised in the first frequency domain resource, wherein the two middle sub-bands of the M sub-bands comprised in the first frequency domain resource are a second sub-band and a third sub-band;
the first frequency domain resource is adjacent to a second frequency domain resource in frequency domain, and the second frequency domain resource is not used to transmit the first signal and the first service data; and
a spacing length between the second sub-band and the second frequency domain resource is greater than a spacing length between the third sub-band and the second frequency domain resource, and the first sub-band is the second sub-band.

7. The communications device (5) according to claim 6, wherein
the first signal comprises at least one of physical layer control signaling, system information, acknowledgment/negative acknowledgment feedback information, scheduling request information, or access request information.

8. The communications device (5) according to any one of claims 6 to 7, wherein
the transmission module (501) is further configured to transmit a synchronization signal, wherein the synchronization signal is used to indicate information about the first sub-band.

9. The communications device (5) according to any one of claims 6 to 8, wherein
the transmission module (501) is further configured to transmit system information, wherein the system information is used to indicate the information about the first sub-band.

10. The communications device (5) according to claim 8 or 9, wherein
the determining module (502) is further configured to determine the first frequency domain resource based on the information about the first sub-band and the system information.

11. A computer storage medium, wherein the computer storage medium stores a computer program, and when the computer program is run on a computer, the computer is enabled to perform the method according to any one of claims 1 to 5.

## Patentansprüche

1. Kommunikationsverfahren, umfassend:
Bestimmen eines ersten Signals; und
Übertragen des ersten Signals in einem ersten Teilband, wobei das erste Teilband in einer ersten Frequenzdomänenressource umfasst ist, wobei
die erste Frequenzdomänenressource verwendet wird, um das erste Signal und erste Dienstdaten zu übertragen; und
die erste Frequenzdomänenressource M Teilbänder umfasst und M eine ganze Zahl größer oder gleich 1 ist; wobei
wenn M eine ungerade Zahl ist, das erste Teilband ein mittleres Teilband der M Teilbänder, die in der ersten Frequenzdomänenressource umfasst sind, ist;
wenn M eine gerade Zahl ist, das erste Teilband in zwei mittleren Teilbändern der M Teilbänder, die in der ersten Frequenzdomänenressource umfasst sind, umfasst ist, wobei die zwei mittleren Teilbänder, die in der ersten Frequenzdomänenressource umfasst sind, ein zweites Teilband und ein drittes Teilband sind;
die erste Frequenzdomänenressource an eine zweite Frequenzdomänenressource in der Frequenzdomäne angrenzt und die zweite Frequenzdomänenressource nicht zum Übertragen des ersten Signals und der ersten Dienstdaten verwendet wird; und
eine Abstandslänge zwischen dem zweiten Teilband und der zweiten Frequenzdomänenressource größer ist als eine Abstandslänge zwischen dem dritten Teilband und der zweiten Frequenzdomänenressource und das erste Teilband das zweite Teilband ist.

2. Verfahren nach Anspruch 1, wobei
das erste Signal mindestens eines von Steuersignalisierung der physikalischen Schicht, Systeminformationen, Rückkopplungsinformationen zur Bestätigung/negativen Bestätigung, Planungsanforderungsinformationen oder Zugriffsanforderungsinformationen umfasst.

3. Verfahren nach einem der Ansprüche 1 bis 2, umfassend:
Übertragen eines Synchronisationssignals, wobei das Synchronisationssignal verwendet wird, um Informationen über das erste Teilband anzugeben.

4. Verfahren nach einem der Ansprüche 1 bis 3, umfassend:
Übertragen von Systeminformationen, wobei die Systeminformationen verwendet werden, um die Informationen über das erste Teilband anzugeben.

5. Verfahren nach Anspruch 3 oder 4, umfassend:
Bestimmen der ersten Frequenzdomänenressource auf Grundlage der Informationen über das erste Teilband und der Systeminformationen.

6. Kommunikationsvorrichtung (5), umfassend:
ein Bestimmungsmodul (502), das dazu konfiguriert ist, ein erstes Signal zu bestimmen; und
ein Übertragungsmodul (501), das dazu konfiguriert ist, das erste Signal in einem ersten Teilband zu übertragen, wobei das erste Teilband in einer ersten Frequenzdomänenressource umfasst ist, wobei
die erste Frequenzdomänenressource verwendet wird, um das erste Signal und erste Dienstdaten zu übertragen; und
die erste Frequenzdomänenressource M Teilbänder umfasst und M eine ganze Zahl größer oder gleich 1 ist; wobei
wenn M eine ungerade Zahl ist, das erste Teilband ein mittleres Teilband der M Teilbänder, die in der ersten Frequenzdomänenressource umfasst sind, ist;
wenn M eine gerade Zahl ist, das erste Teilband in zwei mittleren Teilbändern der M Teilbänder, die in der ersten Frequenzdomänenressource umfasst sind, umfasst ist, wobei die zwei mittleren Teilbänder der M Teilbänder, die in der ersten Frequenzdomänenressource umfasst sind, ein zweites Teilband und ein drittes Teilband sind;
die erste Frequenzdomänenressource an eine zweite Frequenzdomänenressource in der Frequenzdomäne angrenzt und die zweite Frequenzdomänenressource nicht zum Übertragen des ersten Signals und der ersten Dienstdaten verwendet wird; und
eine Abstandslänge zwischen dem zweiten Teilband und der zweiten Frequenzdomänenressource größer ist als eine Abstandslänge zwischen dem dritten Teilband und der zweiten Frequenzdomänenressource und das erste Teilband das zweite Teilband ist.

7. Kommunikationsvorrichtung (5) nach Anspruch 6, wobei
das erste Signal mindestens eines von Steuersignalisierung der physikalischen Schicht, Systeminformationen, Rückkopplungsinformationen zur Bestätigung/negativen Bestätigung, Planungsanforderungsinformationen oder Zugriffsanforderungsinformationen umfasst.

8. Kommunikationsvorrichtung (5) nach einem der Ansprüche 6 bis 7, wobei
das Übertragungsmodul (501) ferner dazu konfiguriert ist, ein Synchronisationssignal zu übertragen, wobei das Synchronisationssignal verwendet wird, um Informationen über das erste Teilband anzugeben.

9. Kommunikationsvorrichtung (5) nach einem der Ansprüche 6 bis 8, wobei
das Übertragungsmodul (501) ferner dazu konfiguriert ist, Systeminformationen zu übertragen, wobei die Systeminformationen verwendet werden, um die Informationen über das erste Teilband anzugeben.

10. Kommunikationsvorrichtung (5) nach Anspruch 8 oder 9, wobei
das Bestimmungsmodul (502) ferner dazu konfiguriert ist, die erste Frequenzdomänenressource auf Grundlage der Informationen über das erste Teilband und der Systeminformationen zu bestimmen.

11. Computerspeichermedium, wobei das Computerspeichermedium ein Computerprogramm speichert und, wenn das Computerprogramm auf einem Computer ausgeführt wird, der Computer in die Lage versetzt wird, das Verfahren nach einem der Ansprüche 1 bis 5 durchzuführen.

## Revendications

1. Procédé de communication, comprenant :
la détermination d'un premier signal ; et
la transmission du premier signal dans une première sous-bande, dans lequel la première sous-bande est comprise dans une première ressource de domaine fréquentiel, dans lequel la première ressource de domaine fréquentiel est utilisée pour transmettre le premier signal et les premières données de service ; et
la première ressource de domaine fréquentiel comprend M sous-bandes, et M est un nombre entier supérieur ou égal à 1 ; dans lequel
lorsque M est un nombre impair, la première sous-bande est une sous-bande médiane parmi les M sous-bandes comprises dans la première ressource de domaine fréquentiel ;
lorsque M est un nombre pair, la première sous-bande est comprise dans deux sous-bandes médianes des M sous-bandes comprises dans la première ressource de domaine fréquentiel, dans lequel les deux sous-bandes médianes comprises dans la première ressource de domaine fréquentiel sont une deuxième sous-bande et une troisième sous-bande ;
la première ressource de domaine fréquentiel est adjacente à une seconde ressource de domaine fréquentiel dans le domaine fréquentiel, et la seconde ressource de domaine fréquentiel n'est pas utilisée pour transmettre le premier signal et les premières données de service ; et
une longueur d'espacement entre la deuxième sous-bande et la seconde ressource de domaine fréquentiel est supérieure à une longueur d'espacement entre la troisième sous-bande et la seconde ressource de domaine fréquentiel, et la première sous-bande est la deuxième sous-bande.

2. Procédé selon la revendication 1, dans lequel le premier signal comprend au moins un élément parmi une signalisation de commande de couche physique, des informations système, des informations de retour d'accusé de réception/accusé de réception négatif, des informations de demande de planification ou des informations de demande d'accès.

3. Procédé selon l'une quelconque des revendications 1 et 2, comprenant :
la transmission d'un signal de synchronisation, dans lequel le signal de synchronisation est utilisé pour indiquer des informations concernant la première sous-bande.

4. Procédé selon l'une quelconque des revendications 1 à 3, comprenant :
la transmission d'informations système, dans lequel les informations système sont utilisées pour indiquer les informations concernant la première sous-bande.

5. Procédé selon la revendication 3 ou 4, comprenant :
la détermination de la première ressource de domaine fréquentiel sur la base des informations concernant la première sous-bande et des informations système.

6. Dispositif de communication (5), comprenant :
un module de détermination (502), configuré pour déterminer un premier signal ; et
un module de transmission (501), configuré pour transmettre le premier signal dans une première sous-bande, dans lequel la première sous-bande est comprise dans une première ressource de domaine fréquentiel, dans lequel
la première ressource de domaine fréquentiel est utilisée pour transmettre le premier signal et les premières données de service ; et
la première ressource de domaine fréquentiel comprend M sous-bandes, et M est un nombre entier supérieur ou égal à 1 ; dans lequel
lorsque M est un nombre impair, la première sous-bande est une sous-bande médiane parmi les M sous-bandes comprises dans la première ressource de domaine fréquentiel ;
lorsque M est un nombre pair, la première sous-bande est comprise dans deux sous-bandes médianes des M sous-bandes comprises dans la première ressource de domaine fréquentiel, dans lequel les deux sous-bandes médianes des M sous-bandes comprises dans la première ressource de domaine fréquentiel sont une deuxième sous-bande et une troisième sous-bande ;
la première ressource de domaine fréquentiel est adjacente à une seconde ressource de domaine fréquentiel dans le domaine fréquentiel, et la seconde ressource de domaine fréquentiel n'est pas utilisée pour transmettre le premier signal et les premières données de service ; et
une longueur d'espacement entre la deuxième sous-bande et la seconde ressource de domaine fréquentiel est supérieure à une longueur d'espacement entre la troisième sous-bande et la seconde ressource de domaine fréquentiel, et la première sous-bande est la deuxième sous-bande.

7. Dispositif de communication (5) selon la revendication 6, dans lequel
le premier signal comprend au moins un élément parmi une signalisation de commande de couche physique, des informations système, des informations de retour d'accusé de réception/accusé de réception négatif, des informations de demande de planification ou des informations de demande d'accès.

8. Dispositif de communication (5) selon l'une quelconque des revendications 6 et 7, dans lequel
le module de transmission (501) est également configuré pour transmettre un signal de synchronisation, dans lequel le signal de synchronisation est utilisé pour indiquer des informations concernant la première sous-bande.

9. Dispositif de communication (5) selon l'une quelconque des revendications 6 à 8, dans lequel
le module de transmission (501) est également configuré pour transmettre des informations système, dans lequel les informations système sont utilisées pour indiquer les informations concernant la première sous-bande.

10. Dispositif de communication (5) selon la revendication 8 ou 9, dans lequel
le module de détermination (502) est également configuré pour déterminer la première ressource de domaine fréquentiel sur la base des informations concernant la première sous-bande et des informations système.

11. Support de stockage informatique, dans lequel le support de stockage informatique stocke un programme informatique, et lorsque le programme informatique est exécuté sur un ordinateur, l'ordinateur est capable de mettre en œuvre le procédé selon l'une quelconque des revendications 1 à 5.
